# EUROPEAN PATENT SPECIFICATION

(11) **EP 3 594 393 B1**
(45) Date of publication and mention of the grant of the patent: **16.12.2020**
(21) Application number: 18305934.4
(22) Date of filing: 11.07.2018
(51) Int. Cl.: D04H 1/485, B60R 13/02, D04H 1/541, D04H 1/544, D04H 1/558, D04H 1/425, B29C 43/00

(54) **WOOD FIBER-BASED INTERIOR TRIM COMPONENT FOR A VEHICLE**
AUF HOLZFASER BASIERENDE INNENRAUMVERKLEIDUNGSKOMPONENTEN FÜR EIN FAHRZEUG
COMPOSANT DE GARNITURE INTÉRIEURE À BASE DE FIBRES DE BOIS POUR VÉHICULE

(43) Date of publication of application: 15.01.2020
(73) Proprietor: Faurecia Intérieur Industrie, 92000 Nanterre (FR)
(72) Inventor: RODILLA GARDO, Jose Antonio, 46020 Valencia (ES); DE LA PUENTE-NUNEZ, Eusebio, 36900 Marín (Pontevedra) (ES)
(74) Representative: Lavoix

(56) References cited:
- EP-A1- 3 059 275
- EP-A2- 0 233 767
- CN-A- 105 015 114
- CN-A- 108 560 139
- DE-A1-102008 008 471
- US-A- 4 474 846

## Description

The present invention concerns a wood fiber-based interior trim component for a vehicle, notably for an automotive.

Vehicle interior trim component comprising a natural fiber-based substrate layer and a decor layer are known. For example, application FR 2 979 871 discloses an automotive interior trim component comprising a substrate layer obtained by press-molding a fibrous molding material comprising natural fibers and/or synthetic fibers.

Vehicle interior trim component may notably be prepared by a method involving a single step of press-molding both the substrate layer and the decor layer (« one-shot molding and covering » step), which is advantageously time and cost effective.

Application DE 10017354 discloses an interior trim component for automotive comprising a pre-compressed and preheated mat based on natural fibers and on polypropylene fibers, a non-woven fabric as intermediate layer and a decor layer. Said component can be prepared by one-shot molding.

Wood fibers cost generally less than long natural fibers (i.e., within the context of the present invention, cellulosic fibers excluding wood fibers, for example flax or kenaf fibers obtained from the bast of the plant after harvesting typically by wet retting). Replacing long natural fibers by wood fibers is thus sought.

However, applying the one-shot molding method to wood fiber-based layers typically produced with a thermoset binder resin is difficult. Indeed, high temperatures, such as above 200°C, are required during the hot-press molding step in order to obtain a part with an appropriate cohesion between the wood fibers and the binder resin that requires pressure and said temperature conditions to react and harden. These high temperatures usually lead to partial or severe degradation of the decor layer, depending on its nature, and/or to an unattractive aspect of the surface of the obtained trim component, for example an « orange peel » appearance. Solutions to remedy these deficiencies remain to be developed.

Wood fiber-based interior trim component, the mechanical features and appearance would be comparable to those of a natural fibers based interior trim component, and which are obtainable by a one-shot molding and covering method, are thus required.

In this connection, according to a first aspect, the invention concerns a method for producing an interior trim component comprising the steps consisting of:
a) mixing polypropylene fibers, wood fibers and polyethylene terephthalate fibers in order to obtain a fiber mixture comprising:
   - from 35 to 60% by weight, preferably from 40 to 55% by weight, of polypropylene fibers,
   - from 35 to 60% by weight, preferably from 35 to 50% by weight, of wood fibers, and
   - up to 30% by weight, preferably from 5 to 25% by weight, of polyethylene terephthalate fibers, then
b) needling the fiber mixture in order to obtain a needled mat,
c) heating the obtained needled mat at a temperature above the softening point of the polypropylene fibers,
d) optionally laminating the heated needled mat with a decor layer, then
e) press-molding the needled mat and the optional decor layer in order to obtain the interior trim component.

The needled mat implemented in the method according to the invention comprises specific components in specific proportions. The invention is based on the discovery that such a needled mat can be prepared by one-shot molding, preferably one shot molding and covering when step d) is present, in order to prepare an interior trim component the mechanical features and appearance of which are close to those of a natural fibers based interior trim component.

The method can comprise, before step a), a step a0) consisting of preparing the wood fibers and comprising the following sub-steps:
α) heating at a temperature from 120 to 180°C under pressure (for example from 5 to 10 bar) wood chips, optionally in presence of water steam and of wax,
β) transforming the wood chips into wood fibers, for example with a disk refiner or a defibrator,
γ) optionally adding one or more additives to the wood fibers,
δ) drying the wood fibers, generally until a residual water content from 6 to 11% by weight versus the weight of wood fibers.

Step a) can be implemented, as mentioned above, in the presence of water steam. The water steam helps softening the wood-chips to be properly defibrated in optimum size and prevents deterioration of properties.

The wax which can be used at step a) is preferably paraffin or a similar wax, such as a bio-wax. When step a) is carried out in the presence of a wax, the obtained wood fibers, and thus the interior trim component made therefrom, exhibits an improved water resistance.

The additive(s) added at step γ) can be chosen from agents useful to reduce odor and/or emissions, and antifungal agents. For example, the additive can be zeolithe or diatomaceous earth, preferably diatomaceous earth:
- the particle size of which, as obtained from a laser particle size analyzer, ranges from less than 3 µm to more than 1 mm, typically 5 to 500 µm, such as from 5 to 100 µm, preferably from 5 to 20 µm, and/or
- comprising 75 to 90% silica, 1 to 4% alumina, 0.1 to 2% iron oxide and optionally calcium oxide (such as from 0 to 15%wt, preferably from 5 to 10%wt), magnesium oxide (such as from 0,01 to 1%), sodium oxide (such as from 0,01 to 1%) and/or potassium oxide (such as from 0,01 to 1%).
for example as described in application EP 17306124.3.

The additive(s) added at step γ) is(are) usually added at a weight ratio from 0.5 to 5%wt, preferably from 1 to 4% by weight compared to the total weights of the additive(s) and of the wood fibers.

Preferably, the wood fibers involved in the method are pine-wood fibers, spruce fibers or a mixture thereof, more preferably pine-wood fibers.

Wood fibers typically have a ratio length / diameter of more than 10.

The fiber length distribution of the wood fibers (WF) is preferably such that more than 50%, notably more than 75% of the wood fibers have a length lower than 12 mm. Preferably, more than 50%, notably more than 75% of the wood fibers have a length between 0.2 and 12 mm.

The method comprises a step a) consisting of mixing polypropylene fibers, wood fibers and polyethylene terephthalate fibers in order to obtain a fiber mixture. The fibers mixture thus comprises polypropylene (PP) fibers and polyethylene terephthalate (PET) fibers in addition to the wood fibers (WF).

The polypropylene (PP) fibers preferably have:
- a length from 50 to 100 mm, preferably from 55 to 80 mm, and/or
- a decitex according to ISO 1973 (1995) from 6 to 25, and/or
- a titer from 3.0 to 8.0 denier, preferably from 4.5 to 7.5 denier, and/or
- a tenacity according to ISO 5079 (1993) is from 25 to 40 cN/tex, preferably from 25 to 35 cN/tex, and/or
- an elongation at break according to ISO 5079 (1993) from 125 to 300 %, preferably from 150 to 250 %, and/or
- a Crimp Level according to ASTM D 3937 (2007) from 1 to 5 crimps/cm, preferably from 2 to 4 crimps/cm, and/or
- a melting point as measured by DSC from 155 to 170°C, preferably from 160 to 167°C, and/or
- a softening point as measured by DSC from 145 to 155°C, preferably from 150 to 155°C.

The PP of the PP fibers is preferably a polypropylene homopolymer. It can either be regenerated PP or virgin PP. The PP fibers can comprise process stabilisers and/or be treated with a spin finish lubricant.

The polyethylene terephthalate (PET) fibers preferably have:
- a length from 50 to 100 mm, preferably from 55 to 80 mm, and/or
- a decitex according to ISO 1973 (1995) from 4 to 15, preferably from 4 to 10, and/or
- a tenacity according to ISO 5079 (1993) is from 30 to 60 cN/tex, preferably from 35 to 55 cN/tex, and/or
- an elongation at break according to ISO 5079 (1993) from 10 to 50 %, preferably from 20 to 40 %, and/or
- a Crimp Level according to ASTM D 3937 (2007) from 1 to 5 crimps/cm, preferably from 2 to 4 crimps/cm, and/or
- a melting point as measured by DSC from 230 to 250°C, preferably from 235 to 245°C.

The fiber mixture prepared at step a) comprises:
- from 35 to 60% by weight, preferably from 40 to 55% by weight of polypropylene fibers,
- from 35 to 60% by weight, preferably 35 to 50% by weight of wood fibers, and
- up to 30% by weight, preferably from 5 to 20% by weight of polyethylene terephthalate fibers.

The polyethylene terephthalate fibers allow improving the ability of the needled mat to be molded and confer tensile properties to the needled mat and more homogeneous mechanical properties, however lower flexural module, of the interior trim component obtained at the end of the method. Generally, mats obtained from fiber mixture comprising less than 5% by weight of polyethylene terephthalate fibers, or free thereof, have a lower formability due to lower tensile properties at molding conditions but higher flexural module and stiffness. Indeed, the PET fibers provide formability as they do not melt at the processing temperatures, so that the tensile properties of the mat are kept. Preferably, when the interior trim component to be prepared comprises deep draw areas and/or has a complex design, fiber mixture comprising more than 10% by weight of polyethylene terephthalate fibers are recommended, otherwise weak areas or tears may appear. An appropriate balance is to be found according to product design and requirements.

As the polypropylene fibers melt at step c) and e), they act as a binder of the WF and PET fibers, and of the needled mat and optional decor layer.

The fiber mixture can further comprise additives, for example colorants, agents useful to reduce odor and/or emissions, and/or antifungal agents, such as zeolithe or diatomaceous earth (preferably as described above). The total weight of additives is usually from 0.1 to 5%wt, preferably from 0.5 to 4% by weight compared to the weight of the fiber mixture.

Preferably, the method comprises, between step a) and b), a step a1) of depositing the fiber mixture obtained at step a) on a polyethylene terephthalate based non-woven fabric in order to obtain a mat, and, at step b), the fiber mixture is needled to the non-woven fabric to obtain the needled mat. The polyethylene terephthalate based non-woven fabric helps with the mat formation and needling to achieve tensile properties that help with the moldability or thermo-formability of the heated mat. The polyethylene terephthalate based non-woven fabric thus allows strengthening the obtained trim component, and helps improving the dynamic behavior of the trim component for safety performance.

The polyethylene terephthalate based non-woven fabric typically comprises at least 50% by weight of polyethylene terephthalate. The non-woven fabric can comprise other fibers, such as polypropylene fibers.

The density of the non-woven is generally from 10 and 100 g/m², for example from 35 to 50 g/m². Below 30 g/m², the moldability qualities can be deteriorated and above 100 g/m² the cost generally becomes too high.

Preferably, the mat obtained at step a1) comprises:
- from 90 to 99% by weight, preferably from 95 to 99% by weight, of fiber mixture, and
- from 1 to 10% by weight, preferably from 1 to 5% by weight of polyethylene terephthalate based non-woven fabric.
These proportions are indeed particularly suited to be able to implement the one step press-molding and covering by a decor layer, and to prepare an interior trim component with a nice appearance.

The method can comprise, between steps a1) and b), a step a2) consisting of calendering the mat, in order to compress it and to facilitate the later needling step b).

The method comprises a step b) consisting of needling the fiber mixture, optionally to the non-woven fabric if present, in order to obtain a needled mat.

Needling leads to mechanical entanglement of the fibers with each other and through the non-woven fabric if present. Needling thus favors the strengthening of the obtained needled mat, and thus improves tensile and mechanical (impacts absorption) properties thereof. Accordingly, because of the presence of the polypropylene fibers which act as a binder, as they melt at step c) and/or e), adding an adhesive (other than the polypropylene fibers in the needled mat) is not required to form the mat and for the lamination (or covering) with a decor layer, as far as this one has a polypropylene compatible back surface.

The method can comprise, after step b), a step b1) consisting of cutting the mat, in order to obtain the desired dimensions for the mat, i.e. to meet the specified size for the product molding tool. This is the last step of the needled mat production process.

The method can comprise, after step b), or after step b1) if present, a step b2) of pre-calibration of the mat. The pre-calibration of the mat is made between hot-plates in a press machine to bring the mat to plasticized status (the PP fibers are thermoplastic fibers). The temperature of the hot plates is usually from 185 to 220°C, to guarantee that, at tool closing, the temperature of the mat is above 155°C. Pressure is also applied on the needled mat during step b2), in order to reduce its thickness, preferably to a thickness close to the one of the interior trim component. The pre-calibration step enables to reduce the volume of the mat so it enables to reduce transport costs when the mat is sent to another plant to produce the final interior trim component.

After step b) or after step b1) or b2) if present, the mat is ready to either be sent palletized to the plant that will mold and produce the final interior trim component or to be stored in pallets to be molded later on in same plant if the component molding equipment is placed there. The method comprises, after step b), or after step b1) or b2) if present, a step c) of heating the obtained needled mat, typically at a temperature so that, at the time of tool close for forming, the temperature of the needled mat remains above the softening point of the polypropylene fibers, preferably above the melting point of the polypropylene fibers, said softening and melting temperatures being measured by DSC. Typically, the needled mat is heated at a temperature from 175 to 220°C, preferably from 185 to 205°C. If the mat has not been pre-calibrated, step c) is the first step of the method to mold the mat into a component. Step c) is known as a calibration step if the mat has not been pre-calibrated in advance. If the mat has not been pre-calibrated in advance, step c) is typically made between hot-plates in a press machine to bring the mat to plasticized status (the PP fibers are thermoplastic fibers). The temperature of the hot plates is usually from 185 to 220°C, to guarantee that, at tool closing, the temperature of the mat is above 155°C. If the mat has not been pre-calibrated, usually, pressure is also applied on the needled mat during step c), in order to reduce its thickness, preferably to a thickness close to the one of the interior trim component. If the mat has been pre-calibrated in advance, step c) is typically implemented by IR-heating.

The method optionally comprises a step d) consisting of laminating the heated needled mat with a decor layer. This step is implemented when the desired trim component comprises a decor layer, which is the preferred embodiment. The decor layer usually has been cut to the desired dimension before step d).

The decor layer can be transparent or opaque. A plastic film or leather imitation foil, a fabric or a carpet (Dilour, Tuft, ...) or leather (real leather) are examples of decor layers. Preferably, the decor layer has a polypropylene compatible back surface, typically a polyolefin based back surface, for example a back surface comprising a polypropylene foam, a polyethylene resin, such as a low density polyethylene (LDPE) or a high density polyethylene (HDPE) resin, or a polypropylene non-woven fabric or film.

When step d) is present, steps d) and e) of the method are generally performed just after step c), while the mat is still hot.

In an embodiment, step d) is absent. This embodiment particularly applies to prepare premium wrapped with stitched coverstock with seams, or vacuum covered products. When step d) is absent, the method can comprise, after step e) of press-molding the needled mat, a step f) consisting of covering the interior trim component. Step f) can comprise sub-steps of applying glue on the surface of the interior trim component and then covering it ("glueing & covering"), or alternatively, it can consist of applying a cover the surface of which has been previously glued.

The method then comprises a step e) consisting of press-molding the needled mat and the optional decor layer in order to obtain the interior trim component. Press-molding involves forming under pressure the heated needled mat and the optional decor layer, whereby the yield strength and the softening temperature of the polypropylene fibers are reached, thus allowing the bonding between all the components and layers of the trim component. Step e) is typically implemented by locating the heated mat and optional decor between two forming tool halves, core and cavity side. The press-molding apparatus usually comprises two press molding half-tools, at least one of the two press molding half-tools being connected in a thermally conductive manner with a cooling system to cool down the mat once thermoformed with the optional decor layer. The press molding tool is then closed by bringing together the two half press-molding half-tools.

Press-molding confers the desired shape and thickness to the interior trim component and cools it down to a demolding temperature, generally close to room temperature (20-25°C).

According to a second aspect, the invention concerns an interior trim component obtainable by the method described above.

The interior trim component is preferably a vehicle interior trim component, notably for a motorized vehicle, preferably an automotive interior trim component, for example a door panel component or dash board trim component. The mechanical properties and safety related performance of the obtained interior trim component comply with the Original Equipment Manufacturer (OEM) requirements as defined in 2018. The area weight and the thickness of the interior trim component are adapted so that the interior trim component complies with the OEM requirements or specifications. The trim component generally has a volumetric density from 0.7 to 1.1 g/cm³, preferably of 0.9 +/-0,1 g/cm³. Accordingly, as an example, for a mat having weight per surface of 1450 g/m², the thickness of the interior trim is 1,6 mm.

The obtained trim component shows a nice appearance, without any delamination or "orange peel" effect, which complies with the Appearance and Fit & Finish requirements (geometrical tolerance) of the OEM.

Generally, the obtained trim component emits less volatile organic components (VOC) and/or odors than a bast natural fiber (NF)-based trim component. Long NF (Bast fibers) are obtained by retting the bast or part of the plants containing the appropriate fibers and the process usually comprises degrading the other substances contained in the plant in water or humidity and submitting them to several steps to remove the waste. This is not a perfect cleaning process and the remaining substances can generate odor and emissions, mold growth when submitted to a Life Test / Climate cycling or Ageing. The cleaner the fibres are required, the more iterations for cleaning and the higher the cost. On the contrary, wood fibres are obtained by using de-barked cut-offs from the timber (sub-product or waste from Sawmills) and washed and softened before defibration.

Odor note from 3 to 4,5 according to VDA270 test are quite typical in usual interior trim component obtained by One-Shot molding of natural fibers/polypropylene mats, whereas the note drops to 2,5 to 3 for the interior trim component according to the invention, and even down to 2. This is advantageous as most OEMs set 3 as the odor note limit or maximal value.

Volatile organic components emissions from interior trim component according to the invention are usually from 15 to 30% lower than those from usual interior trim component obtained by One-Shot molding of bast natural fibers/polypropylene mats.

## Claims

1. Method for producing an interior trim component comprising the steps consisting of:
a) mixing polypropylene fibers, wood fibers and polyethylene terephthalate fibers in order to obtain a fiber mixture comprising polypropylene fibers, wood fibers and polyethylene terephthalate fibers, wherein the mixture comprises:
- from 35 to 60% by weight of polypropylene fibers,
- from 35 to 60% by weight of wood fibers, and
- up to 30% by weight of polyethylene terephthalate fibers, then
b) needling the fiber mixture in order to obtain a needled mat,
c) heating the obtained needled mat at a temperature above the softening point of the polypropylene fibers,
d) optionally laminating the heated needled mat with a decor layer, then
e) press-molding the needled mat and the optional decor layer in order to obtain the interior trim component.

2. Method according to claim 1, wherein the fiber mixture comprises:
- from 40 to 55% by weight of polypropylene fibers,
- from 35 to 50% by weight of wood fibers, and
- from 5 to 25% by weight of polyethylene terephthalate fibers.

3. Method according to claim 1 or 2, comprising, between step a) and b), a step a1) of depositing the fiber mixture obtained at step a) on a polyethylene terephthalate based non-woven fabric in order to obtain a mat, and wherein, at step b), the fiber mixture is needled to the non-woven fabric to obtain the needled mat.

4. Method according to claim 3, wherein the polyethylene terephthalate based non-woven has a density from 10 to 100 g/m², for example from 35 to 50 g/m².

5. Method according to claim 3 or 4, wherein the mat obtained at step a1) comprises:
- from 90 to 99% by weight, preferably from 95 to 99% by weight, of fiber mixture, and
- from 1 to 10% by weight, preferably from 1 to 5% by weight of polyethylene terephthalate based non-woven fabric.

6. Method according to anyone of claims 1 to 5, wherein the wood fibers are pine-wood fibers, spruce fibers or a mixture thereof.

7. Method according to anyone of claims 1 to 6, wherein more than 50%, notably more than 75% of the wood fibers have a length lower than 12 mm, preferably between 0.2 and 12 mm.

8. Method according to anyone of claims 1 to 7, wherein the polyethylene terephthalate fibers have:
- a length from 50 to 100 mm, preferably from 55 to 80 mm, and/or
- a decitex according to ISO 1973 (1995) from 4 to 15, preferably from 4 to 10.

9. Method according to anyone of claims 1 to 8, wherein the polypropylene fibers have:
- a length from 50 to 100 mm, preferably from 55 to 80 mm, and/or
- a decitex according to ISO 1973 (1995) from 6 to 25.

10. Method according to any one of claims 3 to 9, comprising, between steps a1) and b), a step a2) consisting of calendering the mat.

11. Method according to any one of claims 1 to 10, comprising, after step b), a step b1) consisting of cutting the mat.

12. Method according to any one of claims 1 to 11, comprising, after step b), or after step b1) if present, a step b2) of pre-calibration of the mat, wherein the mat is placed between hot-plates in a press machine, and wherein step c) is preferably implemented by IR-heating.

13. Method according to an one of claims 1 to 11, wherein step c) is implemented by placing the mat between hot-plates in a press machine.

14. Interior trim component obtainable by the method according to any one of the previous claims.

15. Interior trim component according to claim 14, which is a vehicle interior trim component, preferably an automotive interior trim component, for example a dash board trim component or a door panel component.

## Patentansprüche

1. Verfahren zur Herstellung einer Innenverkleidungskomponente, umfassend die Schritte bestehend aus:
a) Mischen von Polypropylenfasern, Holzfasern und Polyethylenterephthalatfasern, um eine Fasermischung zu erhalten, die Polypropylenfasern, Holzfasern und Polyethylenterephthalatfasern umfasst, wobei die Mischung umfasst:
- von 35 bis 60 Gewichtsprozent Polypropylenfasern,
- von 35 bis 60 Gewichtsprozent Holzfasern, und
- bis zu 30 Gewichtsprozent Polyethylenterephthalatfasern, anschließend
b) Nadeln der Fasermischung, um eine genadelte Matte zu erhalten,
c) Erwärmen der erhaltenen genadelten Matte auf eine Temperatur oberhalb des Erweichungspunktes der Polypropylenfasern,
d) optional Laminieren der erwärmten genadelten Matte mit einer Dekorschicht, anschließend
e) Pressformen der genadelten Matte und der optionalen Dekorschicht, um die Innenverkleidungskomponente zu erhalten.

2. Verfahren nach Anspruch 1, wobei die Fasermischung umfasst:
- von 40 bis 55 Gewichtsprozent Polypropylenfasern,
- von 35 bis 50 Gewichtsprozent Holzfasern, und
- 5 bis 25 Gewichtsprozent Polyethylenterephthalatfasern.

3. Verfahren nach Anspruch 1 oder 2, umfassend zwischen Schritt a) und b) einen Schritt a1) des Abscheidens der in Schritt a) erhaltenen Fasermischung auf einen Vliesstoff auf Polyethylenterephthalatbasis, um eine Matte zu erhalten, und wobei in Schritt b) die Fasermischung auf den Vliesstoff genadelt wird, um die genadelte Matte zu erhalten.

4. Verfahren nach Anspruch 3, wobei der auf Polyethylenterephthalat basierende Vliesstoff eine Dichte von 10 bis 100 g/m², zum Beispiel von 35 bis 50 g/m², aufweist.

5. Verfahren nach Anspruch 3 oder 4, wobei die in Schritt a1) erhaltene Matte umfasst:
- von 90 bis 99 Gewichtsprozent, vorzugsweise von 95 bis 99 Gewichtsprozent einer Fasermischung und
- von 1 bis 10 Gewichtsprozent, vorzugsweise von 1 bis 5 Gewichtsprozent Vliesstoff auf Polyethylenterephthalatbasis.

6. Verfahren nach einem der Ansprüche 1 bis 5, wobei die Holzfasern Kiefernholzfasern, Fichtenfasern oder eine Mischung davon sind.

7. Verfahren nach einem der Ansprüche 1 bis 6, wobei mehr als 50 Prozent, insbesondere mehr als 75 Prozent der Holzfasern eine Länge von weniger als 12 mm, vorzugsweise zwischen 0,2 und 12 mm, aufweisen.

8. Verfahren nach einem der Ansprüche 1 bis 7, wobei die Polyethylenterephthalatfasern aufweisen:
- eine Länge von 50 bis 100 mm, vorzugsweise von 55 bis 80 mm, und/oder
- ein Dezitex nach ISO 1973 (1995) von 4 bis 15, vorzugsweise von 4 bis 10.

9. Verfahren nach einem der Ansprüche 1 bis 8, wobei die Polyethylenterephthalat-Fasern aufweisen:
- eine Länge von 50 bis 100 mm, vorzugsweise von 55 bis 80 mm, und/oder
- ein Dezitex nach ISO 1973 (1995) von 6 bis 25.

10. Verfahren nach einem der Ansprüche 3 bis 9, umfassend, zwischen den Schritten a1) und b), einen Schritt a2), der aus dem Kalandrieren der Matte besteht.

11. Verfahren nach einem der Ansprüche 1 bis 10, umfassend, nach Schritt b), einen Schritt b1), der aus dem Schneiden der Matte besteht.

12. Verfahren nach einem der Ansprüche 1 bis 11, umfassend, nach Schritt b) oder ggf. nach Schritt b1), einen Schritt b2) der Vorkalibrierung der Matte, wobei die Matte zwischen Heizplatten in einer Pressmaschine angeordnet wird und wobei Schritt c) vorzugsweise durch IR-Erwärmung durchgeführt wird.

13. Verfahren nach einem der Ansprüche 1 bis 11, wobei Schritt c) durch Einlegen der Matte zwischen Heizplatten in einer Pressmaschine durchgeführt wird.

14. Innenverkleidungskomponente, die nach dem Verfahren gemäß einem der früheren Ansprüche erhältlich ist.

15. Innenverkleidungskomponente nach Anspruch 14, bei der es sich um eine Automobil-Innenverkleidungskomponente handelt, vorzugsweise um eine Fahrzeug-Innenverkleidungskomponente, zum Beispiel eine Armaturenbrettverkleidungskomponente oder eine Türverkleidungskomponente.

## Revendications

1. Procédé de production d'un composant de garniture intérieure comprenant les étapes consistant à :
a) mélanger des fibres de polypropylène, des fibres de bois et des fibres de poly(téréphtalate d'éthylène) afin d'obtenir un mélange de fibres comprenant des fibres de polypropylène, des fibres de bois et des fibres de poly(téréphtalate d'éthylène), dans lequel le mélange comprend :
- de 35 à 60 % en poids de fibres de polypropylène,
- de 35 à 60 % en poids de fibres de bois, et
- jusqu'à 30 % en poids de fibres de poly(téréphtalate d'éthylène), puis
b) aiguilleter le mélange de fibres afin d'obtenir un mat aiguilleté,
c) chauffer le mat aiguilleté obtenu à une température au-dessus du point de ramollissement des fibres de polypropylène,
d) facultativement stratifier le mat aiguilleté chauffé avec une couche de décoration, puis
e) mouler à la presse le mat aiguilleté et la couche de décoration facultative afin d'obtenir le composant de garniture intérieure.

2. Procédé selon la revendication 1, dans lequel le mélange de fibres comprend :
- de 40 à 55 % en poids de fibres de polypropylène,
- de 35 à 50 % en poids de fibres de bois, et
- de 5 à 25 % en poids de fibres de poly(téréphtalate d'éthylène).

3. Procédé selon la revendication 1 ou 2, comprenant, entre les étapes a) et b), une étape a1) de dépôt du mélange de fibres obtenu à l'étape a) sur un tissu non tissé à base de poly(téréphtalate d'éthylène) afin d'obtenir un mat, et dans lequel, à l'étape b), le mélange de fibres est aiguilleté sur le tissu non tissé pour obtenir le mat aiguilleté.

4. Procédé selon la revendication 3, dans lequel le non-tissé à base de poly(téréphtalate d'éthylène) a une masse volumique de 10 à 100 g/m², par exemple de 35 à 50 g/m².

5. Procédé selon la revendication 3 ou 4, dans lequel le mat obtenu à l'étape a1) comprend :
- de 90 à 99 % en poids, de préférence de 95 à 99 % en poids, de mélange de fibres, et
- de 1 à 10 % en poids, de préférence de 1 à 5 % en poids de tissu non tissé à base de poly(téréphtalate d'éthylène).

6. Procédé selon l'une quelconque des revendications 1 à 5, dans lequel les fibres de bois sont des fibres de bois de pin, des fibres d'épicéa ou un mélange de celles-ci.

7. Procédé selon l'une quelconque des revendications 1 à 6, dans lequel plus de 50 %, notamment plus de 75 % des fibres de bois ont une longueur inférieure à 12 mm, de préférence comprise entre 0,2 et 12 mm.

8. Procédé selon l'une quelconque des revendications 1 à 7, dans lequel les fibres de poly(téréphtalate d'éthylène) ont :
- une longueur de 50 à 100 mm, de préférence de 55 à 80 mm, et/ou
- un décitex selon ISO 1973 (1995) de 4 à 15, de préférence de 4 à 10.

9. Procédé selon l'une quelconque des revendications 1 à 8, dans lequel les fibres de polypropylène ont :
- une longueur de 50 à 100 mm, de préférence de 55 à 80 mm, et/ou
- un décitex selon ISO 1973 (1995) de 6 à 25.

10. Procédé selon l'une quelconque des revendications 3 à 9, comprenant, entre les étapes a1) et b), une étape a2) constituée du calandrage du mat.

11. Procédé selon l'une quelconque des revendications 1 à 10, comprenant, après l'étape b), une étape b1) constituée de la découpe du mat.

12. Procédé selon l'une quelconque des revendications 1 à 11, comprenant, après l'étape b), ou après l'étape b1) si elle est présente, une étape b2) de préétalonnage du mat, dans lequel le mat est placé entre des plaques chaudes dans une machine à presse, et dans lequel l'étape c) est de préférence mise en œuvre par chauffage IR.

13. Procédé selon l'une des revendications 1 à 11, dans lequel l'étape c) est mise en œuvre par placement du mat entre des plaques chaudes dans une machine à presse.

14. Composant de garniture intérieure pouvant être obtenu par le procédé selon l'une quelconque des revendications précédentes.

15. Composant de garniture intérieure selon la revendication 14, qui est un composant de garniture intérieure de véhicule, de préférence un composant de garniture intérieure d'automobile, par exemple un composant de garniture de tableau de bord ou un composant de panneau de porte.
